Europäisches Patentamt

European Patent Office

Office européen des brevets

(11) Numéro de publication: **0 272 962 B1**

## (12) FASCICULE DE BREVET EUROPEEN

(45) Date de publication du fascicule du brevet:
**19.09.90**

(21) Numéro de dépôt: **87402677.6**

(22) Date de dépôt: **26.11.87**

(51) Int. Cl.⁵: **C03B 23/035**

(54) Procédé et dispositif pour le bombage d'une feuille de verre.

(30) Priorité: **29.11.86 DE 3640892**

(43) Date de publication de la demande:
**29.06.88 Bulletin 88/26**

(45) Mention de la délivrance du brevet:
**19.09.90 Bulletin 90/38**

(84) Etats contractants désignés:
**AT BE CH DE ES FR GB IT LI LU NL SE**

(56) Documents cités:
**EP-A- 0 169 770
EP-A- 0 183 418
JP-B-47 004 186
US-A- 3 468 645
US-A- 4 517 001**

(73) Titulaire: **SAINT-GOBAIN VITRAGE INTERNATIONAL,
18, avenue d'Alsace, F-92400 Courbevoie(FR)**

(84) Etats contractants désignés: **BE CH ES FR GB IT LI LU NL SE AT**

(73) Titulaire: **VEGLA Vereinigte Glaswerke GmbH,
Viktoriaallee 3-5, D-5100 Aachen(DE)**

(84) Etats contractants désignés: **DE**

(72) Inventeur: **Kuster, Hans Werner, Schiervierstrasse 20,
D-5100 Aachen(DE)**
Inventeur: **Vanaschen, Luc, Binsterweg 113,
B-4700 Eurpen(BE)**
Inventeur: **Radermacher, Herbert, Belven 118,
Raeren(BE)**

(74) Mandataire: **Leconte, Jean-Gérard et al, Saint-Gobain
Recherche 39, Quai Lucien Lefranc,
F-93304 Aubervilliers Cedex(FR)**

## Description

La présente invention concerne un procédé pour le bombage d'une feuille de verre, suivant lequel la feuille de verre est réchauffée à la température de bombage, saisie dans la position horizontale par le haut par un dispositif aspirant, amenée au-dessus d'un cadre de bombage définissant le contour périphérique souhaité de la feuille de verre et déposée sur ce cadre de bombage, dont la feuille de verre épouse la forme au niveau de sa périphérie et avec laquel elle est amenée ensuite dans un poste de refroidissement.

Des procédés de ce type sont décrits dans les documents DE-C2 29 45 776 et EP-AI 0 003 391. Le four, dans lequel les feuilles de verre sont réchauffées à la température de bombage, est de préférence un four continu horizontal, les feuilles de verre étant transportées à travers le four posées sur des rouleaux ou sur un coussin de gaz : à l'extrémité du four est prévu un dispositif aspirant mobile vers le haut et vers le bas avec un plateau aspirant plan ou légèrement cintré, qui est abaissé sur la feuille de verre réchauffée, saisit cette feuille de verre et est ensuite remonté. Un cadre de bombage est alors amené en dessous de la feuille de verre soulevée. Dès que ce cadre de bombage est aligné en dessous de la feuille de verre, la dépression régnant dans le dispositif aspirant est coupée, de sorte que la feuille de verre tombe sur le cadre de bombage et épouse la forme de ce dernier sous l'effet de l'énergie cinétique et de son poids propre. Ensuite, le cadre de bombage est transporté avec la feuille de verre dans un poste de refroidissement proche du poste de bombage, dans lequel la feuille de verre est trempée, par exemple par refroidissement brusque au moyen de jets d'air.

Ce procédé connu a divers inconvénients. Parmi ceux-ci, on peut citer, en particulier, le fait que la feuille de verre fléchit d'une manière incontrôlable sous l'effet de son poids propre et/ou de l'énergie cinétique à l'intérieur du cadre de bombage, de sorte que des bombages parfaitement cylindriques ne peuvent pas être réalisés de cette façon. De plus, ce procédé ne permet de produire que des bombages plus ou moins faibles, parce que les forces de bombage sont limitées par l'énergie cinétique, c'est-à-dire par la hauteur de chute et par le poids propre des feuilles de verre.

Il est également connu de JP-B 47 004 186 de souffler de l'air chaud contre la face inférieure d'une feuille de verre lorsque celle-ci repose sur un cadre de bombage; un tel soufflage permet de compenser partiellement l'effet de la gravité mais non de contrôler exactement le bombage de la partie centrale en excluant toute déformation sphérique alors que seul un bombage cylindrique est souhaité.

Il est enfin connu de EP-A 169 770 de procéder au bombage de feuilles de verre en les appliquant à l'aide d'un courant ascendant de gaz chaud contre une surface courbe à laquelle on donne la configuration désirée pour le verre puis de les déposer doucement sur un cadre porteur également en forme. Ce procédé n'est toutefois applicable qu'avec une surface courbe à concavité tournée vers le haut et de plus les formes de vitrage les plus complexes ne peuvent pas être obtenues.

L'invention a pour but de procurer un procédé de bombage du type spécifié, selon lequel la feuille de verre n'est pas soumise à une flexion indésirable à l'intérieur du cadre de bombage et qui permet, en outre, des bombages de la feuille de verre qui sont plus importants que ceux qui peuvent être obtenus sous le seul effet du poids propre de la feuille de verre ou de son énergie cinétique de chute.

Suivant l'invention, ce but est réalisé par le fait que, pendant l'opération de bombage, la feuille de verre est soutenue par un moule de bombage correspondant à la forme souhaitée de la feuille de verre et remplissant l'espace situé à l'intérieur du cadre de bombage, et que, par soufflage d'un flux de gaz chaud à partir du haut sur la feuille de verre, celle-ci est pressée contre le moule de bombage composé du cadre de bombage et du moule de bombage intérieur.

Suivant le procédé conforme à l'invention, le cadre de bombage est en quelque sorte remplacé par un moule complet en deux parties et les forces de bombage sont exercées uniformément par un flux de gaz chaud sur l'ensemble de la feuille de verre et ce dans une mesure qui suffit pour appliquer la feuille de verre, même dans le cas de bombages importants et compliqués, par la totalité de sa surface contre la surface de moulage du moule complet. Cette manière de procéder permet, d'une part, d'éviter toutes les déformations indésirables et, d'autre part, d'appliquer des forces de bombage suffisamment importantes. Au terme de l'opération de bombage, le moule de bombage intérieur est séparé du cadre de bombage et le procédé peut alors se poursuivre de la manière connue par le fait que le cadre de bombage sert à présent de cadre de transport avec lequel la feuille de verre est transportée dans le poste de refroidissement suivant.

Le procédé conforme à l'invention peut en principe être conduit d'une manière telle que la feuille de verre soit courbée sur un moule à courbure convexe vers le haut ou soit pressée dans un moule à courbure concave vers le bas. L'utilisation de moules concaves, dans lesquels la feuille de verre est pressée, est plus avantageuse pour certaines formes de vitrages, tandis que d'autres formes peuvent être obtenues avec le même résultat au moyen d'un moule à courbure vers le haut.

L'invention a également pour objet un dispositif pour la réalisation du procédé décrit précédemment, ce dispositif comportant un four de réchauffage destiné à réchauffer les feuilles de verre dans une position horizontale, un poste de bombage faisant suite au four de réchauffage et comportant un cadre de bombage pouvant être positionné dans le poste de bombage, et un dispositif aspirant déplaçable dans le sens horizontal entre le four de réchauffage et une position située au-dessus du cadre de bombage dans le poste de bombage pour transférer la feuille de verre réchauffée à la température de bombage sur le cadre de bombage. Selon l'invention un moule de bombage est disposé à l'intérieur du cadre de bombage et une cheminée entoure le poste de bombage, un flux de gaz chaud étant produit dans cette cheminée, en particulier un flux d'air chaud, ce flux agissant à partir du haut sur la feuille de verre déposée sur le moule de bombage assemblé.

Le procédé conforme à l'invention et un exemple de réalisation préféré d'un dispositif pour exécuter ce procédé seront décrits plus en détail ci-après avec référence aux dessins annexés, l'invention n'étant toutefois pas limitée à cette forme d'exécution.

Dans les dessins annexés:

La Fig. 1 illustre le déroulement de principe du procédé conforme à l'invention par la représentation de ses phases essentielles,

la Fig. 2 est une vue en perspective d'un dispositif destiné à bomber une feuille de verre suivant le procédé de l'invention et ensuite à tremper cette feuille de verre, et

la Fig. 3 est une vue en coupe du dispositif représenté fragmentairement sur la Fig. 2 suivant la ligne III-III.

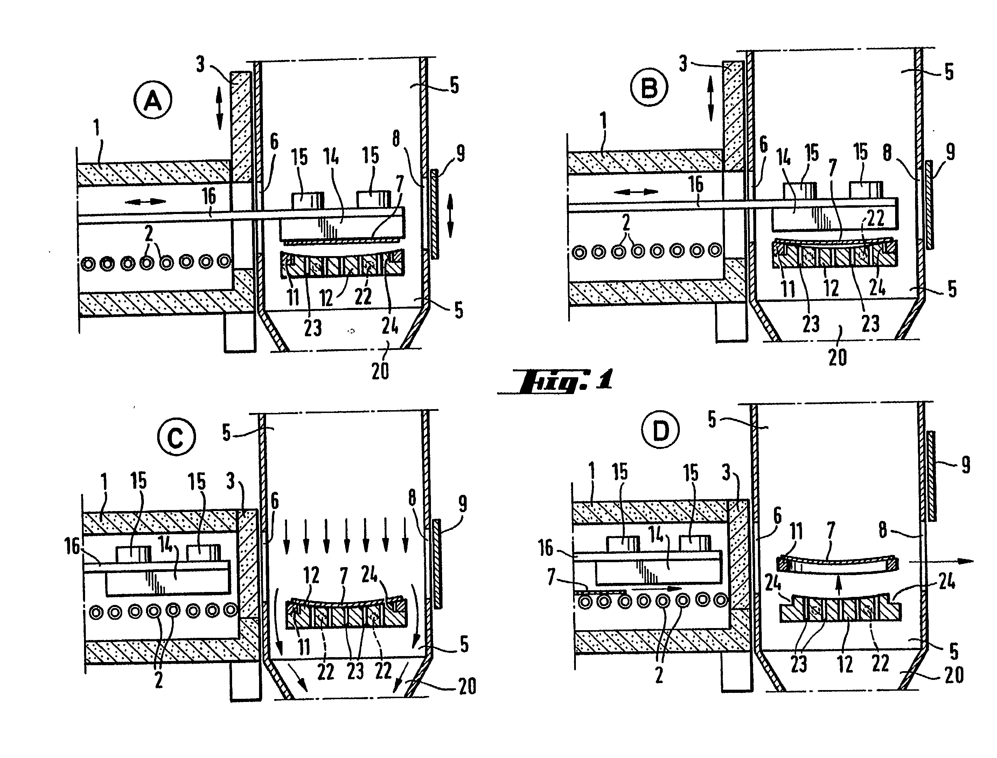

La Fig. 1 illustre, chaque fois par une coupe longitudinale verticale de la section d'extrémité d'un four de réchauffage continu et d'un poste de bombage qui y fait suite, les phases successives d'une forme d'exécution préférée du procédé conforme à l'invention.

L'installation utilisée pour exécuter le procédé comporte essentiellement un four continu horizontal 1, dans lequel les feuilles de verre disposées dans une position horizontale sur une voie de transport formée de rouleaux transporteurs entraînés 2, sont réchauffées à la température de bombage nécessaire d'environ 650°C. Le four 1 peut être fermé à son extrémité par un volet coulissant 3 déplaçable dans le sens vertical. Immédiatement en aval du four de réchauffage 1 est disposée une cheminée verticale 5 par laquelle un flux de gaz chaud, en particulier un flux d'air chaud, s'écoule dans le sens vertical vers le bas, lorsque l'opération de bombage proprement dite est exécutée. La cheminée 5 présente une ouverture 6, par laquelle la feuille de verre 7 réchauffée y est introduite, et une ouverture 8 pouvant être fermée par un volet 9, par laquelle la feuille de verre 7 en est sortie après le bombage pour être introduite dans le poste de refroidissement suivant.

Le dispositif de bombage est disposé dans la cheminée 5 en dessous du plan de transport de la feuille de verre 7. Le dispositif de bombage est constitué d'un cadre de bombage 11 et d'un moule de bombage 12 disposé à l'intérieur de ce cadre. Le cadre de bombage 11 et le moule de bombage intérieur 12 sont adaptés l'un à l'autre de manière à former ensemble la surface de moulage sur laquelle la feuille de verre 7 réchauffée est pressée. Le cadre de bombage 11 peut être séparé du moule 12 et sert, après le bombage de la feuille de verre, d'anneau de support pour transporter la feuille de verre bombée vers le poste de traitement suivant.

Suivant une première forme d'exécution, le moule de bombage intérieur 12 est placé à un endroit fixe à l'intérieur de la cheminée, par exemple à l'aide des entretoises 22 représentées. Le cadre de bombage 11 est installé de telle façon que, d'une part, il soit mobile dans le sens horizontal entre le poste de bombage et le poste de refroidissement suivant et que, d'autre part, il puisse être déplacé vers le haut et vers le bas à l'intérieur du poste de bombage entre une position inférieure, dans laquelle il coopère avec le moule de bombage 12, et une position supérieure, dans laquelle il peut être déplacé dans le sens horizontal. Selon une autre forme d'exécution, le moule de bombage intérieur 12 est monté mobile vers le haut et vers le bas à l'intérieur de la cheminée 5, tandis que le cadre de bombage 11 n'est déplaçable que dans le sens horizontal.

Pour transporter la feuille de verre 7 réchauffée du four 1 dans le poste de bombage à l'intérieur de la cheminée 5, on utilise un dispositif aspirant déplaçable dans le sens horizontal et ayant, par exemple, la forme d'un plateau aspirant 14. Sur ce plateau aspirant 14 sont montées des pompes à vide 15 qui assurent la création de la dépression nécessaire à l'intérieur du plateau aspirant 14. Le plateau aspirant 14 est monté sur des rails 16 au moyen desquels il peut être déplacé entre la position située au-dessus du dispositif de bombage 11, 12 et une position située à l'intérieur du four de réchauffage 1.

L'opération de bombage se déroule de la manière suivante : la feuille de verre réchauffée à la température de bombage dans le four de réchauffage 1 est soulevée, à l'intérieur du four de réchauffage, à l'aide du plateau aspirant 14, au-dessus des rouleaux transporteurs 2. Le volet 3 est alors ouvert et le plateau aspirant 14 se déplace avec la feuille de verre 7, à travers l'ouverture 6 dans la cheminée 5, dans une position située au-dessus du dispositif de bombage 11, 12. Cet état est illustré dans la position A de la Fig. 1.

Lorsque le plateau aspirant 14 avec la feuille de verre 7 a atteint sa position précise située au-dessus du dispositif de bombage 11, 12, la dépression dans le plateau aspirant 14 est coupée. La feuille de verre 7 est, de cette façon, déposée sur le cadre de bombage extérieur 11. Sous l'effet de son poids propre, la feuille de verre 7 fléchit déjà faiblement (position B). Immédiatement après que la feuille de verre 7 a été déposée sur le dispositif de bombage, le plateau aspirant 14 est ramené dans sa position de départ dans le four 1 et le volet coulissant 3 est fermé.

Un flux d'air chaud à une température d'environ 650°C est à présent dirigé dans la cheminée 5, à partir du haut, sur la feuille de verre 7 posée sur le dispositif de bombage. Le débit volumique et la pression du flux de gaz sont réglés en fonction de l'épaisseur, de la température et de la forme souhaitée de la feuille de verre d'une manière telle que celle-ci, sous l'action de ce flux de gaz, s'applique avec épousement de forme contre le cadre de bombage 11 et le moule intérieur 12 (position C). Pendant le temps d'action du flux de gaz chaud, les ouvertures 6 et 8 de la cheminée 5 restent fermées par les volets coulissants 3 et 9. Le flux de gaz chaud pénètre en dessous du dispositif de bombage 11, 12 dans un conduit 20 et est recyclé dans la cheminée 5.

Lorsque la feuille de verre 7 s'est appliquée contre la surface de moulage du dispositif de bombage 11, 12, le flux de gaz chaud est coupé. Le cadre de bombage 11 est ensuite soulevé (position D). Le volet 9 est alors ouvert et la feuille de verre 7 est amenée, à l'aide du cadre de bombage 11 qui sert à présent de couronne de transport ou de support, par l'ouverture 8, hors de la cheminée 5, dans un poste de refroidissement voisin. Le poste de refroidissement peut être constitué, par exemple, par un four de refroidissement continu, dans lequel la feuille de verre est lentement refroidie. Le poste de refroidissement peut, en particulier, également être un poste de trempe, dans lequel la feuille de verre est trempée thermiquement par refroidissement brusque, par exemple au moyen d'air de refroidissement.

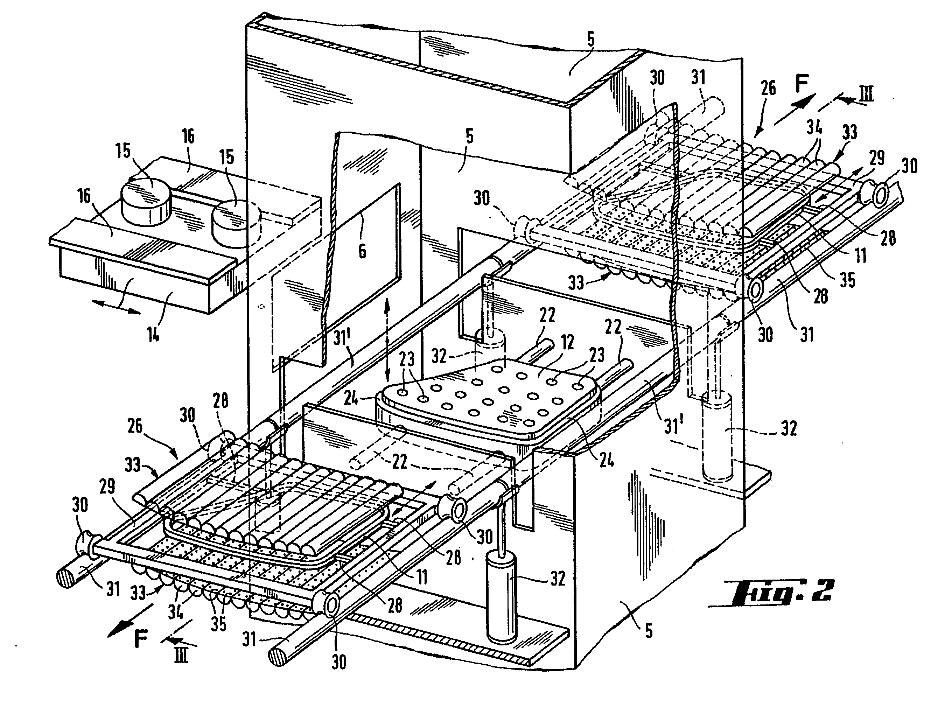

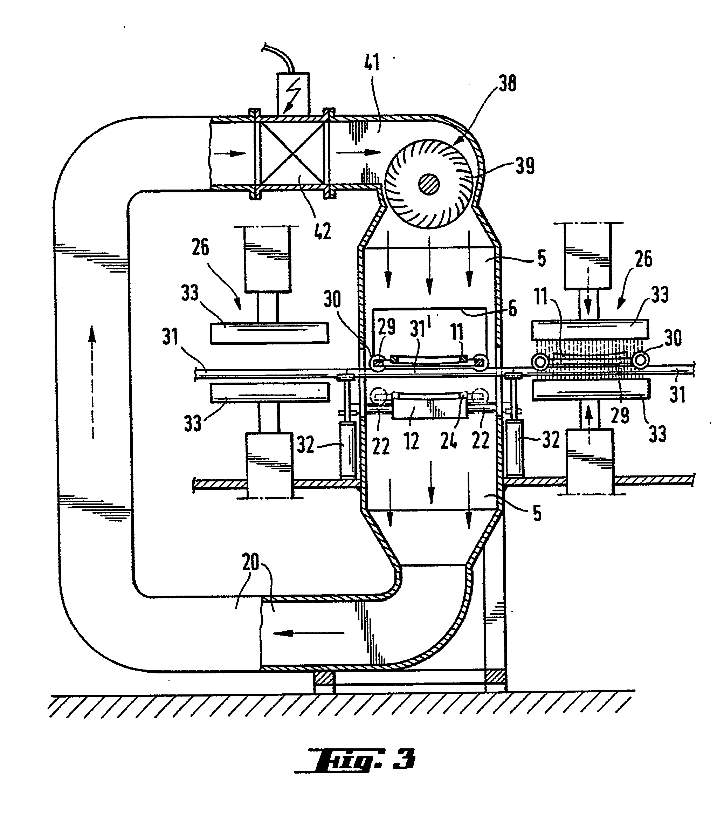

Un dispositif pour fabriquer des feuilles de verre bombées et trempées thermiquement, par exemple des vitrages d'automobiles en verre de sécurité trempé, est illustré sur les Fig. 2 et 3. La cheminée 5 est formée par une enveloppe de section rectangulaire, qui est disposée selon une orientation verticale, immédiatement en aval d'un four continu horizontal, non représenté par souci de clarté. Le plateau aspirant 14, qui est pourvu de pompes à vide 15 adéquates, occupe dans le dessin sa position de repos à l'intérieur du four continu. Le plateau aspirant 14 peut être introduit dans la cheminée 5 par l'ouverture 6, pour amener les feuilles de verre à partir du four de réchauffage dans la cheminée et les y déposer sur le dispositif de bombage.

Le moule de bombage intérieur 12 du dispositif de bombage est fixé en place au moyen d'entretoises 22 à l'intérieur de la partie inférieure de la cheminée 5. La surface de moulage du moule de bombage 12, contre laquelle la feuille de verre est pressée, correspond à la forme souhaitée de la feuille de verre. Le moule de bombage 12 est pourvu d'une série de forures 23, par lesquelles, lors de l'opération de pressage, l'air présent entre la feuille de verre et la surface de moulage peut être évacué. Ces forures 23 sont avantageusement en communication avec une chambre, non représentée, disposée en dessous du moule 12, qui, au terme de l'opération de bombage, est mise sous pression pendant un court laps de temps pour ainsi détacher, le cas échéant, la feuille de verre du moule de bombage à l'aide du gaz sortant des forures 23. Tout le long de sa périphérie, le moule de bombage 12 est pourvu d'une feuillure 24. Dans cette feuillure 24, le cadre de bombage 11 est logé pendant l'opération de bombage.

Dans le cas du dispositif représenté sur les dessins, en plus de la cheminée, perpendiculairement à la direction longitudinale du four de réchauffage, de chaque côté de la cheminée 5, est prévu un poste de trempe 26, de sorte que deux cadres de bombage 11 peuvent prendre alternativement en charge une feuille de verre et l'amener dans le poste de trempe associé. Chaque cadre de bombage 11 est fixé, par l'intermédiaire d'entretoises latérales 28, à un châssis de transport 29 qui, pour sa part, peut être déplacé au moyen des roues 30 sur des rails 31 entre le poste de bombage dans la cheminée et son poste de trempe.

A l'intérieur du poste de trempe 26, les rails 31 sont fixés en place. Le segment médian 31' des rails, dans la zone de la cheminée 5, est monté mobile vers le haut et vers le bas pour pouvoir abaisser le cadre de bombage 11 dans la feuillure 24 du moule de bombage 12 ou pour pouvoir soulever la feuille de verre après l'opération de bombage au niveau des rails fixes 31. Pour abaisser et soulever les segments de rails 31', des vérins pneumatiques ou hydrauliques 32 sont prévus et sont installés à l'extérieur de la cheminée 5.

Les postes de trempe 26 sont de construction classique, c'est-à-dire qu'une unité de soufflage 33 est installée chaque fois au-dessus et en dessous du plan de transport pour les feuilles de verre bombées. Chaque unité de soufflage 33 est constituée, par exemple, d'une série de corps tubulaires 34 disposés les uns à côté des autres qui présentent des orifices de soufflage 35 ménagés dans leurs surfaces tournées vers la feuille de verre. Après l'opération de trempe dans le poste de trempe 26, les feuilles de verre trempées sont déplacées avec le châssis de transport 29 dans le sens des flèches F dans un poste de déchargement adjacent, dans lequel la feuille de verre est enlevée du cadre de bombage 11. Le cadre de bombage 11 est ensuite disponible pour une nouvelle opération de bombage.

Le dispositif destiné à produire le flux de gaz chaud est illustré sur la Fig. 3 qui montre une coupe verticale suivant la ligne III-III du dispositif décrit à propos de la Fig. 2. Le flux de gaz chaud est produit au moyen d'une soufflante à flux transversal 38. La soufflante à flux transversal 38 produit, à l'aide du rotor ayant la forme d'une roue à ailettes 39, un flux de gaz de grande section et à champ d'écoulement homogène et convient, par conséquent, particulièrement pour le but prévu. La cheminée 5 se raccorde par sa partie inférieure à un conduit 20, par lequel le gaz est recyclé vers le conduit d'aspiration 41 de la soufflante à flux transversal 38. En amont du conduit d'aspiration 41 est disposée une section de conduit 42 qui est pourvue d'un registre de chauffage électrique destiné à chauffer le flux de gaz à la température nécessaire d'environ 650°C.

**Revendications**

1. Procédé pour bomber une feuille de verre (7), suivant lequel la feuille de verre (7) est réchauffée à la température de bombage, saisie dans la position horizontale par le haut par un dispositif aspirant (14), amenée au-dessus d'un cadre de bombage (11) définissant le contour périphérique souhaité de la feuille de verre (7) et déposée sur ce cadre de bombage (11), dont la feuille de verre (7) épouse la forme au niveau de sa périphérie et avec lequel elle est amenée ensuite dans un poste de refroidissement (26), caractérisé en ce que, pendant l'opération de bombage, la feuille de verre (7) est soutenue par un moule de bombage (12) correspondant à la forme souhaitée de la feuille de verre (7) et remplissant l'espace situé à l'intérieur du cadre de bombage (11), et que par soufflage d'un flux de gaz chaud à partir du haut sur la feuille de verre (7), celle-ci est pressée contre le moule de bombage (11, 12) composé du cadre de bombage (11) et du moule de bombage intérieur (12).

2. Procédé suivant la revendication 1, caractérisé en ce que la feuille de verre (7) est bombée vers l'extérieur à l'aide du flux de gaz chaud sur un moule de bombage (11, 12) composé du cadre de bombage (11) et du moule de bombage intérieur (12) et présentant une surface de bombage à courbure convexe vers le haut.

3. Procédé suivant la revendication 1, caractérisé en ce que la feuille de verre (7) est bombée vers l'intérieur à l'aide du flux de gaz chaud dans un moule de bombage (11, 12) composé du cadre de bombage (11) et du moule de bombage intérieur (12) et présentant une surface de bombage à courbure concave vers le bas.

4. Dispositif pour réaliser le procédé suivant l'une quelconque des revendications 1 à 3, comportant un four de réchauffage (1) destiné à réchauffer les feuilles de verre (7) dans une position horizontale, un poste de bombage faisant suite au four de réchauffage (1) et comportant un cadre de bombage (11) pouvant être positionné dans le poste de bombage, et un dispositif aspirant (14) déplaçable dans le sens horizontal entre le four de réchauffage (1) et une position située au-dessus du cadre de bombage (11) dans le poste de bombage pour transférer la feuille de verre (7) réchauffée à la température de bombage sur le cadre de bombage (11), caractérisé par un moule de bombage (12) disposé à l'intérieur du cadre de bombage (11) et par une cheminée (5) entourant le poste de bombage, dans laquelle est produit un flux de gaz chaud, en particulier un flux d'air chaud agissant à partir du haut sur la feuille de verre déposée sur le moule de bombage assemblé (11, 12).

5. Dispositif suivant la revendication 4, caractérisé en ce que le moule de bombage intérieur (12) est installé en un endroit fixe dans la cheminée (5) et le cadre de bombage (11) est monté mobile vers le haut et vers le bas et est déplaçable horizontalement dans la position soulevée.

6. Dispositif suivant la revendication 5, caractérisé en ce que le cadre de bombage (11) est monté à l'intérieur d'un châssis de transport (29) déplaçable sur des roues (30) et le long de rails (31) dont les segments (31') peuvent être déplacés dans une position d'extrémité supérieure et une position d'extrémité inférieure, dans la zone de la cheminée (5).

7. Dispositif suivant la revendication 4, caractérisé en ce que le cadre de bombage (11) est déplaçable horizontalement entre une position d'extrémité située à l'intérieur de la cheminée (5) et une position d'extrémité située dans un poste de refroidissement disposé à côté de la cheminée (5), et que le moule de bombage intérieur (12) est monté de manière à pouvoir être déplacé vers le haut et vers le bas entre une position d'extrémité déterminée par la coopération avec le cadre de bombage (11) et une position d'extrémité rendant possible le déplacement horizontal du cadre de bombage (11).

8. Dispositif suivant l'une quelconque des revendications 4 à 7, caractérisé en ce que le cadre de bombage (11) et le moule de bombage intérieur (12) forment ensemble une surface de moulage à courbure convexe vers le haut.

9. Dispositif suivant l'une quelconque des revendications 1 à 7, caractérisé en ce que le cadre de bombage (11) et le moule de bombage intérieur (12) forment ensemble une surface de moulage à courbure concave vers le bas.

10. Dispositif suivant la revendication 9, caractérisé en ce que le moule de bombage intérieur (12) est pourvu d'ouvertures ou de forures (23) destinées à évacuer l'air de l'espace intermédiaire entre la feuille de verre et la surface de moulage pendant l'opération de bombage.

## Patentansprüche

1. Verfahren zum Biegen einer Glasscheibe (7), bei dem die Glasscheibe (7) auf Biegetemperatur erwärmt, in horizontaler Lage von oben von einer Saugvorrichtung (14) erfaßt, über einen die gewünschte Umfangskontur der Glasscheibe (7) definierenden Biegerahmen (11) verbracht und auf den Biegerahmen (11) abgelegt wird, deren Form die Glasscheibe (7) an ihrem Umfang annimmt und mit dem sie anschließend in eine Kühlstation (26) verbracht wird, dadurch gekennzeichnet, daß die Glasscheibe (7) während des Biegevorgangs durch eine den Raum innerhalb des Biegerahmens (11) ausfüllende, der gewünschten Form der Glasscheibe (7) entsprechende Biegeform (12) abgestützt wird, und daß durch Aufblasen eines heißen Gasstroms von oben auf die Glasscheibe (7) diese an die aus dem Biegerahmen (11) und der inneren Biegeform (12) zusammengesetzte Biegeform (11, 12) angedrückt wird.

2. Verfahren nach Anspruch 1, dadurch gekennzeichnet, daß die Glasscheibe (7) mit Hilfe des heißen Gasstroms über eine aus dem Biegerahmen (11) und der inneren Biegeform (12) zusammengesetzte, eine nach oben konvex gewölbte Biegefläche aufweisende Biegeform (11, 12) herumgebogen wird.

3. Verfahren nach Anspruch 1, dadurch gekennzeichnet, daß die Glasscheibe (7) mit Hilfe des heißen Gasstroms in eine aus dem Biegerahmen (11) und der inneren Biegeform (12) zusammengesetzte, eine nach unten gewölbte konkave Biegefläche aufweisende Biegeform hineingebogen wird.

4. Vorrichtung zur Durchführung des Verfahrens nach einem der Ansprüche 1 bis 3, mit einem Erwärmungsofen (1) zum Erwärmen der Glasscheiben (7) in horizontaler Lage, einer an den Erwärmungsofen (1) anschließenden Biegestation mit einem in der Biegestation positionierbaren Biegerahmen (11), und mit einer in horizontaler Richtung zwischen dem Erwärmungsofen (1) und einer Position oberhalb des Biegerahmens (11) in der Biegestation verfahrbaren Saugvorrichtung (14) zum Übergeben der auf Biegetemperatur erwärmten Glasscheibe (7) auf den Biegerahmen (11), gekennzeichnet durch eine innerhalb des Biegerahmens (11) angeordnete Biegeform (12) und durch einen die Biegestation umgebenden Strömungskanal (5), in dem ein von oben auf die auf die zusammengesetzte Biegeform (11, 12) abgelegte Glasscheibe einwirkender heißer Gasstrom, insbesondere ein Heißluftstrom erzeugt wird.

5. Vorrichtung nach Anspruch 4, dadurch gekennzeichnet, daß die innere Biegeform (12) ortsfest in dem Strömungskanal (5) angeordnet ist und der Biegerahmen (11) heb- und senkbar angeordnet und in der angehobenen Stellung in horizontaler Richtung verfahrbar ist.

6. Vorrichtung nach Anspruch 5, dadurch gekennzeichnet, daß der Biegerahmen (11) innerhalb eines auf Rädern (30) verfahrbaren Transportrahmens (29) angeordnet und entlang Schienen (31) verfahrbar ist, deren Abschnitte (31') im Bereich des Strömungskanals (5) in eine obere und eine untere Endstellung bewegbar sind.

7. Vorrichtung nach Anspruch 4, dadurch gekennzeichnet, daß der Biegerahmenform (11) in horizontaler Richtung zwischen einer Endstellung innerhalb des Strömungskanals (5) und einer Endstellung in einer neben dem Strömungskanal (5) angeordneten Kühlstation verfahrbar ist, und daß die innere Biegeform (12) zwischen einer durch das Zusammenwirken mit dem Biegerahmen (11) bestimmten Endstellung und einer die horizontale Bewegung des Biegerahmens (11) ermöglichenden Endstellung heb- und senkbar angeordnet ist.

8. Vorrichtung nach einem der Ansprüche 4 bis 7, dadurch gekennzeichnet, daß der Biegerahmen (11) und die innere Biegeform (12) zusammen eine nach oben konvex gewölbte Formfläche bilden.

9. Vorrichtung nach einem der Ansprüche 1 bis 7, dadurch gekennzeichnet, daß der Biegerahmen (11) und die innere Biegeform (12) zusammen eine nach unten gewölbte konkave Formfläche bilden.

10. Vorrichtung nach Anspruch 9, dadurch gekennzeichnet, daß die innere Biegeform (12) zum Entlüften des Zwischenraums zwischen der Glasscheibe und der Formfläche während des Biegevorgangs mit Öffnungen oder Bohrungen (23) versehen ist.

## Claims

1. A method of curving a sheet of glass (7), according to which the glass sheet (7) is heated to the curving temperature, is seized in the horizontal position from above by a suction device (14), is brought above a curving frame (11) defining the desired peripheral contour of the glass sheet (7) and is deposited on this curving frame (11), the shape of which the glass sheet (7) hugs at its periphery and with which it is then brought into a cooling station (26), characterized in that, during the curving operation, the glass sheet (7) is supported by a curving mould (12) corresponding to the desired form of the glass sheet (7) and occupying the space situated inside the curving frame (11), and that by blowing of a hot gas flow from above onto the glass sheet (7) this sheet is pressed against the curving mould (11, 12), composed of the curving frame (11) and of the internal curving mould (12).

2. A method according to Claim 1, characterized in that the glass sheet (7) is curved outwards by means of the flow of hot gas onto a curving mould (11, 12), composed of the curving frame (11) and of the internal curving mould (12) and having a curving surface which is convex upwards.

3. A method according to Claim 1, characterized in that the glass sheet (7) is curved inwards by means of the flow of hot gas into a curving mould (11, 12), composed of the curving frame (11) and of the internal curving mould (12) and having a curving surface which is concave downwards.

4. Apparatus for carrying out the method according to any one of Claims 1 to 3, comprising a heating furnace (1) intended for heating the glass sheets (7) in a horizontal position, a curving station following the heating furnace (1) and comprising a curving frame (11) which can be positioned in the curving station, and a suction device (14) displaceable in the horizontal direction between the heating furnace (1) and a position situated above the curving frame (11) in the curving station for transferring the glass sheet (7), heated to the curving temperature, onto the curving frame (11), characterized by a curving mould (12) disposed inside the curving frame (11) and by a chimney (5) surrounding the curving station, in which chimney a flow of hot gas is produced, especially a flow of hot air, acting from above on the glass sheet deposited on the assembled curving mould (11, 12).

5. Apparatus according to Claim 4, characterized in that the internal curving mould (12) is installed at a fixed position inside the chimney (5) and the curving frame (11) is mounted upwardly and downwardly movable and is displaceable horizontally in the raised position.

6. Apparatus according to Claim 5, characterized in that the curving frame (11) is mounted inside a transporting chassis (29) displaceable on wheels (30) along rails (31), the segments (31') of which can be displaced into an upper extreme position and a lower extreme position, in the zone of the chimney (5).

7. Apparatus according to Claim 4, characterized in that the curving frame (11) is displaceable horizontally between an extreme position situated inside the chimney (5) and an extreme position situated in a cooling station disposed adjacent to the chimney (5) and that the internal curving mould (12) is mounted in such a way that it can be displaced upwards and downwards between an extreme position determined by the cooperation with the curving frame (11) and an extreme position which renders possible the horizontal displacement of the curving frame (11).

8. Apparatus according to any one of Claims 4 to 7, characterized in that the curving frame (11) and the internal curving mould (12) together form a moulding surface having a curvature which is convex upwards.

9. Apparatus according to any one of Claims 1 to 7, characterized in that the curving frame (11) and the internal curving mould (12) together form a moulding surface having a curvature which is concave downwards.

10. Apparatus according to Claim 9, characterized in that the internal curving mould (12) is provided with openings or bores (23) intended for the evacuation of the air from the intermediate space between the glass sheet and the moulding surface during the curving operation.

**Fig. 1**

EP 0 272 962 B1

**Fig. 2**

**Fig. 3**